# EUROPÄISCHE PATENTANMELDUNG

(11) **EP 2 527 176 A1**
(43) Veröffentlichungstag der Anmeldung: **28.11.2012**
(21) Anmeldenummer: 12168259.5
(22) Anmeldetag: 16.05.2012
(51) Int. Cl.: B60J 7/12, B60J 7/20

(54) **Verstellbares Fahrzeugdach mit einem Faltverdeck**

(30) Priorität: 26.05.2011 DE 202011101127 U
(71) Anmelder: Magna Car Top Systems GmbH, 74321 Bietigheim-Bissingen (DE)
(72) Erfinder: Liebhardt, Randolf, 71120 Grafenau (DE); Helwich, Dirk, 71665 Vaihingen/Enz (DE); Hesse, Jan, 74321 Bietigheim-Bissingen (DE)
(74) Vertreter: Völger, Silke Beatrix

(57) **Zusammenfassung**

Beschrieben wird ein verstellbares Fahrzeugdach, das ein zwischen einer Schließstellung und einer Ablagestellung verstellbares Faltverdeck (1) mit einem Verdeckgestänge (3) und einem Verdeckbezugstoff (2) aufweist, wobei das Verdeckgestänge (3) ein vorderes Dachteil (5) umfasst, das in der Schließposition am Windschutzscheibenrahmen anliegt, mit einem dem Verdeckgestänge (3) zugeordneten Spannbügel (9), der in der Schließstellung von einem verriegelbaren Sturmgestänge (12) gehalten ist. Erfindungsgemäß ist vorgesehen, dass das vordere Dachteil (5) über eine an der Karosserie gelagerte Viergelenkkinematik (4) verstellbar ist, wobei das vordere Dachteil (5) mit zwei an der Karosserie angeschlagenen Lenkern (18,19) der Viergelenkkinematik (4) gelenkig verbunden und in der Ablageposition mit der Außenseite nach oben abgelegt ist.

## Beschreibung

Die Erfindung bezieht sich auf ein verstellbares Fahrzeugdach mit einem Faltverdeck nach dem Oberbegriff des Anspruches 1.

In der DE 10 2006 047 005 A1 wird ein verstellbares Fahrzeugdach mit einem Faltverdeck beschrieben, das zwischen einer den Fahrzeuginnenraum überdeckenden Schließstellung und einer Ablageposition zu verstellen ist, in der das Faltverdeck in einem heckseitigen Verdeckkasten abgelegt ist. Das Faltverdeck weist einen Verdeckbezugstoff auf, der auf einem Verdeckgestänge gehalten und über eine Gelenkkinematik zwischen der Schließ- und der Ablageposition verstellbar ist. Das Verdeckgestänge umfasst ein vorderes Dachteil, das in der Schließposition am Windschutzscheibenrahmen anliegt, sowie mehrere in Querrichtung verlaufende Spriegel, auf denen der Verdeckbezugstoff aufliegt. Die Verdeckkinematik ist als Mehrgelenkkinematik ausgebildet, die karosserieseitig gelagerte Lenker umfasst, wobei das vordere Dachteil über ein zusätzliches Gelenk gegenüber den karosserieseitigen Lenkern abklappbar gehalten ist und in der Ablageposition im Verdeckkasten in einer um 90° nach unten verschwenkten Position abgelegt ist.

Der Verdeckbezugstoff wird in der Schließposition von einem heckseitigen Spannbügel unter Spannung gesetzt, der über ein Sturmgestänge in seiner den Verdeckstoff spannenden Lage gesichert ist. Das Sturmgestänge weist drei gelenkig gekoppelte Sturmlenker auf, von denen der hintere Lenker am Spannbügel und der vordere Lenker an einem Bauteil der Verstellkinematik gelenkig gehalten ist. Das Drehgelenk zwischen mittlerem und hinterem Sturmlenker ist in Schließposition des Verdecks in eine Übertotpunktlage verstellbar.

Der Erfindung liegt die Aufgabe zugrunde, ein verstellbares Fahrzeugdach mit einem Faltverdeck konstruktiv einfach auszubilden.

Diese Aufgabe wird erfindungsgemäß mit den Merkmalen des Anspruches 1 gelöst. Die Unteransprüche geben zweckmäßige Weiterbildungen an.

Das erfindungsgemäße Fahrzeugdach umfasst ein Faltverdeck, das zwischen einer den Fahrzeuginnenraum überdeckenden Schließposition und einer Ablageposition verstellbar ist und einen Verdeckbezugstoff aufweist, der von einem Verdeckgestänge getragen wird. Teil des Verdeckgestänges ist ein vorderes Dachteil, das in geschlossener Position des Daches am Windschutzscheibenrahmen anliegt und zweckmäßigerweise an diesem verriegelbar ist. Der Verdeckbezugstoff kann sich in Fahrzeuglängsrichtung bis zum vorderen Dachteil erstrecken und gegebenenfalls an diesem angebunden sein. Das vordere Dachteil bildet beispielsweise eine vordere Dachkappe, die die Verriegelungsmechanik zur Verriegelung mit dem Windschutzscheibenrahmen umfassen kann. Des Weiteren sind auch Ausführungen des vorderen Dachteils als festes Dachteil möglich, in das beispielsweise ein Schiebe- bzw. Hubdach integriert ist.

Möglich ist aber auch eine Ausführung, in der der Verdeckbezugstoff das vordere Dachteil, welches sich in Querrichtung über die Breite des Fahrzeugdaches erstreckt, überspannt.

Das Verdeckgestänge umfasst des Weiteren einen Spannbügel, über den der Verdeckbezugstoff in Schließposition des Fahrzeugdaches unter Spannung gesetzt wird. Der Spannbügel befindet sich im hinteren Teil des Fahrzeugdaches und ist zweckmäßigerweise zwischen einer der Schließposition zugeordneten Spannstellung und einer Lösestellung zu bewegen, insbesondere zu verschwenken, in welcher die Spannung im Verdeckbezugstoff abgebaut ist. Die Lösestellung wird insbesondere während der Überführungsbewegung des Fahrzeugdaches zwischen Schließ- und Ablageposition eingenommen.

Zur Sicherung des Spannbügels in der Schließstellung des Fahrzeugdaches dient ein Sturmgestänge, das vorteilhafterweise mehrere Sturmstangen umfasst, von denen eine hintere Sturmstange am Spannbügel und eine vordere Sturmstange an einer Verstellkinematik des Faltverdecks angreift, über die das Faltverdeck zwischen Schließ- und Ablageposition zu verstellen ist. In der Schließposition wird der Spannbügel über das Sturmgestänge verriegelt bzw. arretiert.

Das vordere Dachteil ist über eine Viergelenkkinematik zu verstellen, welche zwei Lenker umfasst, die beide über jeweils ein Drehgelenk an der Fahrzeugkarosserie bzw. einem mit der Fahrzeugkarosserie verbundenen Bauteil wie zum Beispiel einer Lagerkonsole angelenkt sind. Das vordere Dachteil ist auf der der Fahrzeugkarosserie abgewandten Seite gelenkig mit jedem Lenker der Viergelenkkinematik gekoppelt und bildet somit das verbindende Bauteil der Viergelenkkinematik auf der der Fahrzeugkarosserie abgewandten Seite. In der Ablageposition ist das vordere Dachteil gleichsinnig wie in der Schließposition mit der Außenseite nach oben angeordnet. Vorteilhafterweise behält das vordere Dachteil auch während der Überführungsbewegung zwischen Schließ- und Ablageposition seine Ausrichtung mit der Außenseite nach oben zumindest annähernd bei.

Diese Ausführung hat den Vorteil, dass mit verhältnismäßig geringem konstruktivem Aufwand ein Fahrzeugdach mit einem Faltverdeck bereitgestellt wird, das zugleich in der Schließposition eine ausreichend hohe Spannung im Verdeckbezugstoff aufweist. Die Verriegelung des Spannbügels erfolgt über das Sturmgestänge, das sich mit einer Sturmstange an einem der Lenker der Viergelenkkinematik oder einer Kinematik eines sich in Querrichtung erstreckenden Spriegels des Verdeckgestänges, insbesondere einer Eckspriegelkinematik abstützt. Vorteilhaft ist des Weiteren, dass sich die Ausrichtung des vorderen Dachteils in Schließ- und Ablageposition nicht ändert; in beiden Positionen ist die Außenseite des vorderen Dachteils nach oben gerichtet. Zweckmäßigerweise behält das vordere Dachteil diese Ausrichtung auch während der Überführungsbewegung zumindest annähernd bei, so dass das vordere Dachteil bei der Überführung zwischen seinen Endlagen lediglich eine Parallelverschiebung in Fahrzeuglängsrichtung und in der Fahrzeughöhe erfährt.

Es handelt sich bei diesem Fahrzeugdach um ein zweiteiliges Dach, bei dem sich an das obere Dachteil, das die Querverbindung zwischen den beiden Lenkern der Viergelenkkinematik bildet, ein hinteres Dachteil anschließt, das sich im geschlossenen Zustand zwischen dem vorderen Dachteil und der Fahrzeugkarosserie erstreckt. Das hintere Dachteil erstreckt sich entlang eines der Lenker der Viergelenkkinematik bzw. ist fest mit einem der Lenker verbunden, wobei das vordere Dachteil gelenkig mit den beiden Lenkern verbunden ist. Zum hinteren Dachteil gehören zweckmäßigerweise ein oder mehrere Querspriegel, die Teil des Verdeckgestänges sind und den Verdeckbezugstoff tragen. Die Querspriegel sind entweder an der Verstellkinematik des Faltverdecks oder unmittelbar an der Fahrzeugkarosserie bzw. einer Lagerkonsole gelagert, die mit der Fahrzeugkarosserie verbunden ist.

Für die Verstellung des Fahrzeugdaches zwischen Schließ- und Ablageposition genügt grundsätzlich die Viergelenkkinematik. Darüber hinaus sind keine weiteren Kinematiken erforderlich. Es ist insbesondere nicht notwendig, das vordere Dachteil mit einer zusätzlichen Bewegungsmöglichkeit an die Viergelenkkinematik anzukoppeln, vielmehr ist das vordere Dachteil das die beiden Lenker verbindende Bauteil.

Die konstruktiv einfache Ausführung des Fahrzeugdaches wird auch durch die Anordnung des Sturmgestänges zwischen Spannbügel und einem Lenker der Viergelenkkinematik oder der Eckspriegelkinematik erreicht. Hierdurch ist insbesondere eine Platz sparende Ausführung gegeben, die sowohl in der Ablageposition als auch in der Schließposition einen verhältnismäßig geringen Raumbedarf aufweist.

Das Sturmgestänge umfasst mindestens zwei, gegebenenfalls drei gelenkig gekoppelte Sturmstangen, die zwischen dem Spannbügel und der Viergelenkkinematik bzw. der Eckspriegelkinematik angeordnet sind. Die Drehbewegung zwischen zumindest zwei der Sturmstangen ist zweckmäßigerweise von einem Anschlag begrenzt. Gegebenenfalls ist im Falle von drei Sturmstangen die Drehbewegung sowohl zwischen vorderer und mittlerer Sturmstange als auch zwischen mittlerer und hinterer Sturmstange durch jeweils einen Anschlag begrenzt. Des Weiteren ist es zweckmäßig, zwischen zumindest zwei Sturmstangen ein Federelement vorzusehen, beispielsweise eine Schenkelfeder, wobei über das Federelement die Sturmstangen in eine Richtung um die Drehachse des Gelenks kraftbeaufschlagt sind. Über das Federelement kann eine Kraftbeaufschlagung in eine Verriegelungsposition bewirkt werden. Insbesondere in Verbindung mit einem Verriegelungshebel, der das Sturmgestänge in der Verriegelungsposition arretiert, kann über das Federelement ein Einknicken des Gelenks verhindert werden, an dem das Federelement wirksam ist.

Gemäß weiterer zweckmäßiger Ausführung ist vorgesehen, dass das Sturmgestänge an dem in Fahrtrichtung hinten liegenden Lenker der Viergelenkkinematik oder an einer daran gelagerten Eckspriegelkinematik abgestützt ist. Es handelt sich bei diesem Lenker vorteilhafterweise um den Hauptlenker, wohingegen der vorne liegende Lenker der Viergelenkkinematik die Funktion einer C-Säule übernimmt. An dem Hauptlenker der Viergelenkkinematik kann gegebenenfalls ein Aktuator zur Verstellung zwischen den Endlagen angreifen. Grundsätzlich möglich ist aber auch eine manuelle Verstellung des Faltverdecks zwischen Schließ- und Ablageposition.

Gemäß einer weiteren zweckmäßigen Ausführung sind die beiden Lenker der Viergelenkkinematik über Gelenke an einer karosserieseitigen Lagerkonsole gelagert. Die Lagerkonsole wird fest mit der Fahrzeugkarosserie verbunden und ist Träger der Gelenke für die Viergelenkkinematik. Der Spannbügel kann über eine Spannbügelkinematik, die Lenker umfasst, schwenkbar an der Lagerkonsole gelagert sein.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Darstellung eines verstellbaren Fahrzeugdachs mit einem Faltverdeck, dargestellt in der Schließposition als Halbmodell,

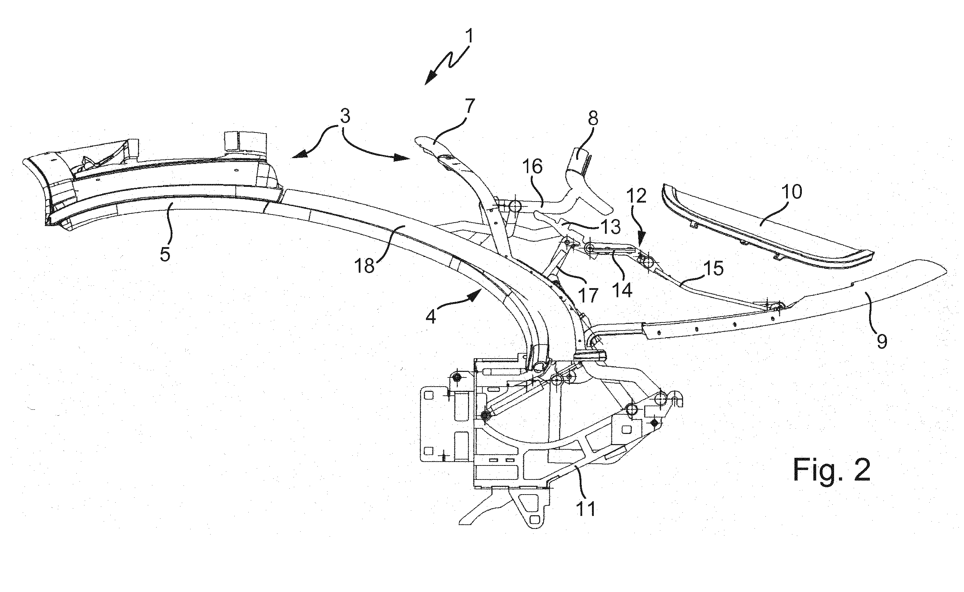

- Fig. 2: das Faltverdeck in Seitenansicht,
- Fig. 3: das Faltverdeck in einer Zwischenposition während der Überführung von der Schließ- in die Ablagestellung,
- Fig. 4: das Faltverdeck in einer weiter fortgeschrittenen Zwischenstellung bei der Überführung in die Ablagestellung,
- Fig. 5: das Faltverdeck in der Ablagestellung.

In den Figuren sind gleiche Bauteile mit gleichen Bezugszeichen versehen.

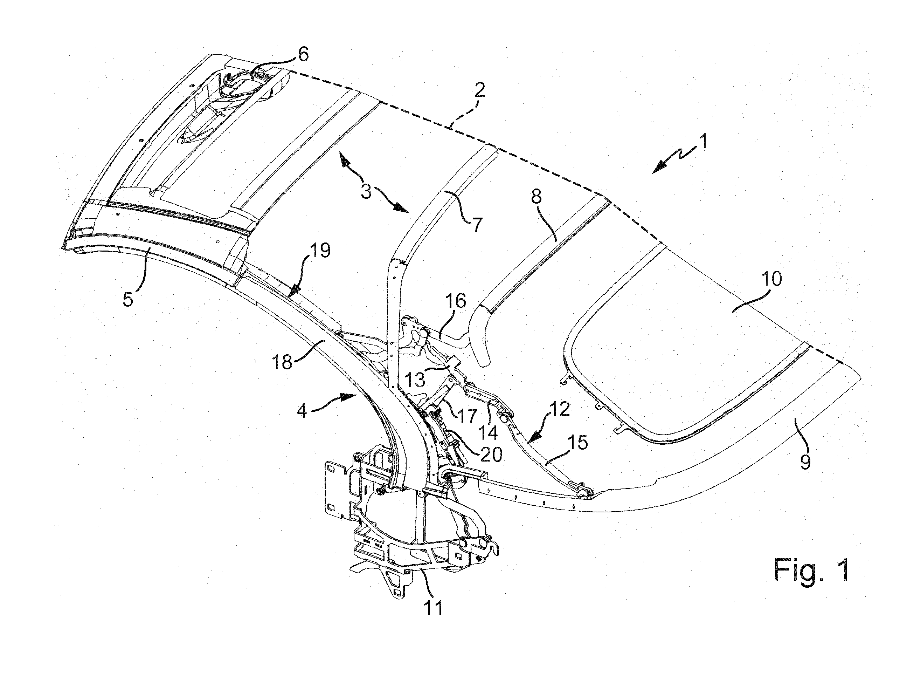

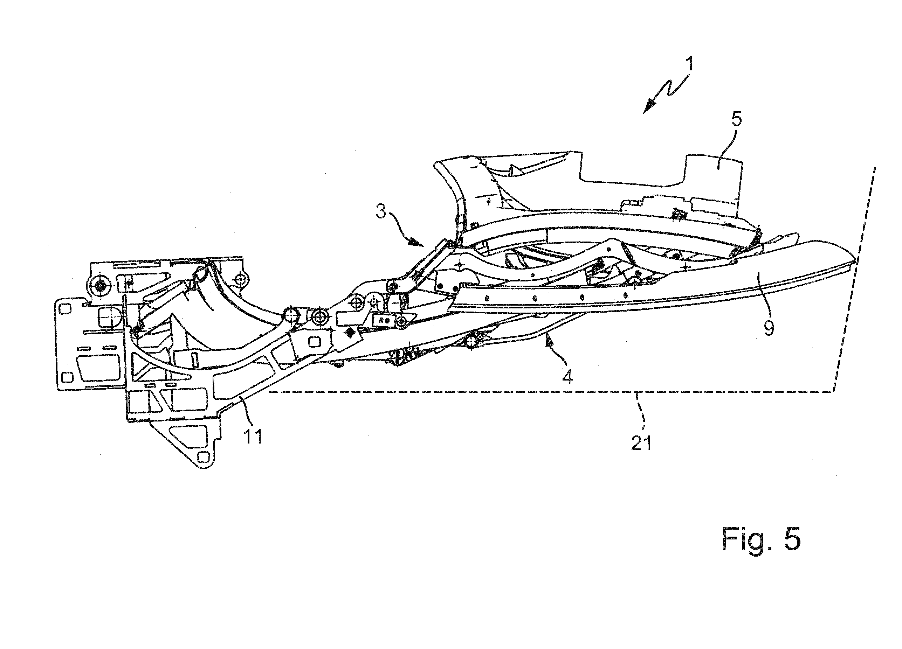

In den Figuren ist ein Faltverdeck 1 für ein Cabriolet-Fahrzeug dargestellt, das zwischen der in Fig. 1 dargestellten, einen Fahrzeuginnenraum überspannenden Schließposition und der in Fig. 5 dargestellten Öffnungs- bzw. Ablageposition verstellbar ist, in welcher das Faltverdeck in einem heckseitigen Verdeckkasten abgelegt ist. Das Faltverdeck 1 weist einen Verdeckbezugstoff 2 auf, der von einem Verdeckgestänge 3 getragen ist. Das Faltverdeck 1 wird zwischen der Schließ- und der Ablageposition mittels einer Viergelenkkinematik 4 verstellt, die an der Fahrzeugkarosserie über eine Lagerkonsole gelenkig befestigt ist. Das Verdeckgestänge 3 umfasst ein vorderes Dachteil 5, beispielsweise eine vordere Dachkappe, das bzw. die in der Schließposition über eine Verriegelungsmechanik 6 am Windschutzscheibenrahmen verriegelt ist, sowie des Weiteren verschiedene, sich in Querrichtung erstreckende Bügel bzw. Spriegel 7, 8 und einen heckseitigen Spannbügel 9, der zum Spannen des Verdeckbezugstoffes dient. Teil des Faltverdecks 1 ist außerdem eine Heckscheibe 10, die in den Verdeckbezugstoff 2 integriert ist und sich bei geschlossenem Faltverdeck zwischen dem Spannbügel 9 und dem in Fahrzeuglängsrichtung davor liegenden, als Eckspriegel 8 ausgebildeten Querbügel befindet. Vor dem Eckspriegel 8 liegt im Zwischenraum zum vorderen Dachteil 5 der den Hauptspriegel 7 bildende Querbügel, der ebenso wie der Eckspriegel 8 das Faltverdeck in Fahrzeugquerrichtung überspannt.

Die beiden Lenker der Viergelenkkinematik 4 sind über Gelenke verschwenkbar an einer Lagerkonsole 11 gelagert, die karosseriefest angeordnet ist. Der Spannbügel 9 ist über eine Spannbügelkinematik, die mehrere Lenker umfasst, an der Lagerkonsole 11 gelagert. Die Gelenkachsen der Viergelenkkinematik 4 und der Lenker des Spannbügels 9 verlaufen zumindest annähernd parallel zueinander und in Querrichtung des Fahrzeugs.

In der Schließposition gemäß Fig. 1 liegt der hinten liegende Spannbügel 9, der zumindest annähernd U-förmig ausgebildet ist, auf einem Verdeckkastendeckel auf, unter dem der Raum liegt, der zur Aufnahme des Faltverdecks in der Ablageposition dient. Damit in der Schließposition über den Spannbügel die erforderliche Stoffspannung im Verdeckbezugstoff 2 aufgebracht werden kann, ist der Spannbügel 9 mittels eines Sturmgestänges 12 in seiner auf dem Verdeckkastendeckel aufliegenden Position gehalten und arretiert. Das Sturmgestänge 12 weist drei gelenkig gekoppelte Sturmstangen 13, 14, 15 auf, wobei die vordere Sturmstange 13 an ihrem vorderen Ende gelenkig mit einem Lenker 16 des Eckspriegels 8 verbunden ist und der hintere Lenker 15 gelenkig mit dem Spannbügel 9. Des Weiteren befindet sich zwischen vorderer und mittlerer Sturmstange 13 bzw. 14 sowie zwischen mittlerer und hinterer Sturmstange 14 bzw. 15 jeweils ein Drehgelenk. Der Lenker 16 des Eckspriegels 8 ist an einem Hauptlenker 19 der Viergelenkkinematik angeordnet, die vordere Sturmstange 13 ist über den Lenker 16 indirekt mit dem Hauptlenker 19 gelenkig verbunden.

Das Sturmgestänge 12 wird von einem Verriegelungshebel 17 beaufschlagt, der die vordere Sturmstange 13 des Sturmgestänges 12 in der geschlossenen Position des Faltverdecks in eine Verriegelungsstellung drückt. Hierbei wird das Drehgelenk zwischen der mittleren Sturmstange 14 und der hinteren Sturmstange 15 bis zum Erreichen eines Anschlags verstellt. Im Bereich dieses Drehgelenks befindet sich außerdem eine Schenkelfeder, die die Sturmstangen 14 und 15 in die Anschlags- bzw. Verriegelungsposition drückt. Der Verriegelungshebel 17 ist zweckmäßigerweise am Hauptlenker 19 gelenkig gelagert, der ebenso wie eine C-Säule 18 Bestandteil der Viergelenkkinematik 4 ist; C-Säule 18 und Hauptlenker 19 bilden die beiden an der Fahrzeugkarosserie bzw. einer Lagerkonsole gelenkig gelagerten Lenker der Viergelenkkinematik. Der Verriegelungshebel 17 wird beispielsweise über einen Aktuator 20 verstellt.

Bei der Überführungsbewegung des Fahrzeugdaches 1 von der Schließposition gemäß Fig. 1 in die Ablageposition gemäß Fig. 5 wird zunächst der Verriegelungshebel 17 betätigt und aus der in Fig. 1 dargestellten Verriegelungslage weggeschwenkt, woraufhin das Sturmgestänge aus seiner Verriegelungsposition in die Entriegelungsposition verstellt und die Stoffspannung im Verdeckbezugstoff 2 abgebaut wird. Indem ein Steuerelement am Sturmgestänge mit einem Gegensteuerelement an der Dachkinematik zusammenwirkt, kann der Spannbügel 9 angehoben werden, dass der Verdeckkastendeckel angehoben werden kann.

In einer weiteren Ausführung ist die vordere Sturmstange 13 des Sturmgestänges 12 unmittelbar an einem Lenker der Verdeckkinematik 4, insbesondere am Hauptlenker 19 angelenkt. Möglich ist es auch, dass die vordere Sturmstange 13 am Hauptspriegel 7 bzw. einem dem Hauptspriegel 7 zugeordneten Lenker gelenkig abgestützt ist.

Aufgrund der dreiteiligen Ausführung des Sturmgestänges 12 kann bei der Überführungsbewegung zwischen Schließ- und Ablageposition eine Kollision einer Sturmstange mit dem darunter liegenden Verdeckkastendeckel vermieden werden, selbst wenn der Verdeckkastendeckel eine nach oben gerichtete Wölbung bzw. einen Höcker aufweist.

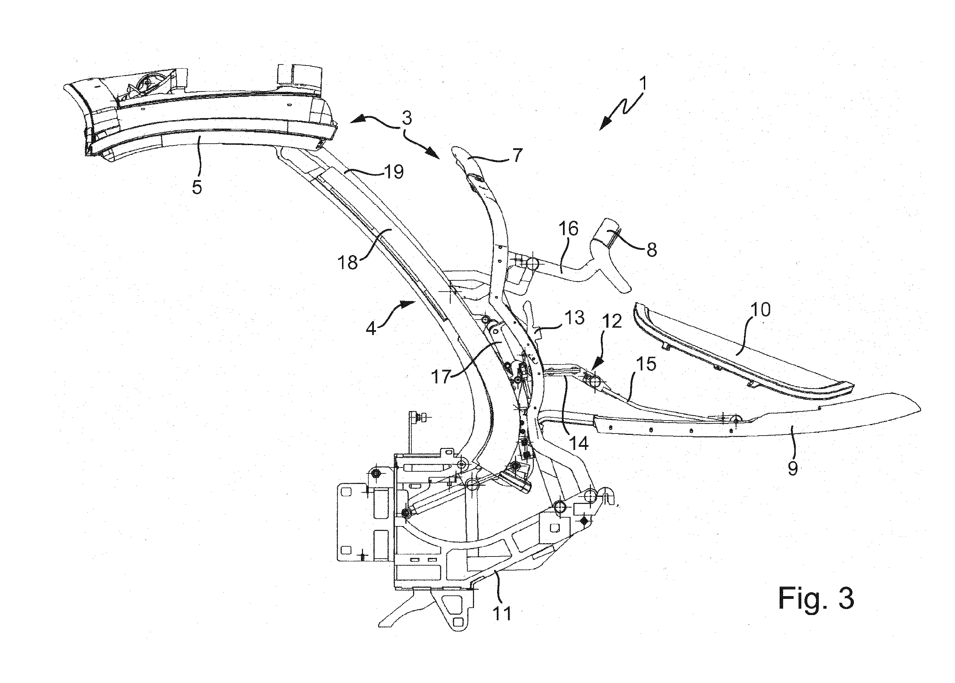

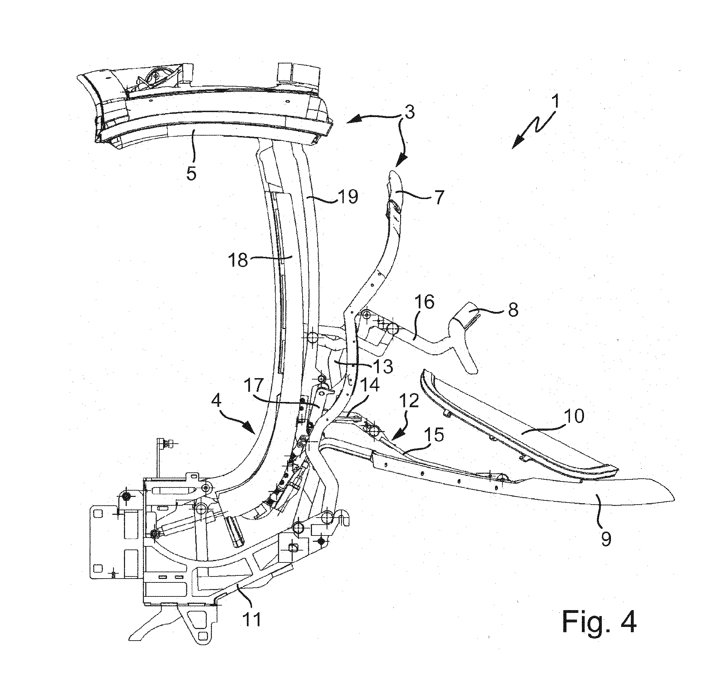

Wie insbesondere der Zwischenposition gemäß den Fig. 3 und 4 zu entnehmen, befindet sich der Hauptlenker 19 in Fahrtrichtung gesehen hinter der C-Säule 18. Dementsprechend sind die karosserieseitigen Gelenke an der Lagerkonsole 11 in Fahrtrichtung versetzt zueinander angeordnet, wobei das Drehgelenk der C-Säule 18 vor dem Drehgelenk des Hauptlenkers 19 liegt.

In der Ablageposition gemäß Fig. 5 befindet sich das Faltverdeck 1 im heckseitigen Verdeckkasten 21, der von dem Verdeckkastendeckel zu verschließen ist. Der Spannbügel 9 weist grundsätzlich die gleiche Orientierung wie in der Schließposition auf, er ist jedoch gegenüber der Schließposition nach unten in den Verdeckkasten 21 hinein abgesenkt.

Das vordere Dachteil 5 weist in der Schließposition gemäß Fig. 1 und der Ablageposition gemäß Fig. 5 die gleiche Orientierung mit der Außenseite nach oben auf. Auch während der Überführungsbewegung ist die Außenseite des vorderen Dachteils 5, wie den Fig. 3 und 4 zu entnehmen, nach oben gerichtet.

### Bezugszeichenliste

- 1: Faltverdeck
- 2: Verdeckbezugstofif
- 3: Verdeckgestänge
- 4: Viergelenkkinematik
- 5: vorderes Dachteil
- 6: Verriegelungsmechanik
- 7: Hauptspriegel
- 8: Eckspriegel
- 9: Spannbügel
- 10: Heckscheibe
- 11: Lagerkonsole
- 12: Sturmgestänge
- 13: vordere Sturmstange
- 14: mittlere Sturmstange
- 15: hintere Sturmstange
- 16: Lenker Eckspriegel
- 17: Verriegelungshebel
- 18: Lenker C-Säule
- 19: Hauptlenker
- 20: Aktuator
- 21: Verdeckkasten

## Patentansprüche

1. Verstellbares Fahrzeugdach, das ein zwischen einer Schließstellung und einer Ablagestellung verstellbares Faltverdeck (1) mit einem Verdeckgestänge (3) und einem Verdeckbezugstoff (2) aufweist, wobei das Verdeckgestänge (3) ein vorderes Dachteil (5) umfasst, das in der Schließposition am Windschutzscheibenrahmen anliegt, mit einem dem Verdeckgestänge (3) zugeordneten Spannbügel (9), der in der Schließstellung von einem verriegelbaren Sturmgestänge(12) gehalten ist,
**dadurch gekennzeichnet,**
**dass** das vordere Dachteil (5) über eine an der Karosserie gelagerte Viergelenkkinematik (4) verstellbar ist, wobei das vordere Dachteil (5) mit zwei an der Karosserie angeschlagenen Lenkern (16) der Viergelenkkinematik (4) gelenkig verbunden und in der Ablageposition mit der Außenseite nach oben abgelegt ist.

2. Fahrzeugdach nach Anspruch 1,
**dadurch gekennzeichnet,**
**dass** das Sturmgestänge (12) auf der dem Spannbügel (9) abgewandten Seite an einem Lenker (16) der Viergelenkkinematik (4) bzw. einem Lenker eine Kinematik eines sich in Querrichtung erstreckenden Spriegels des Verdeckgestänges (3) abgestützt ist.

3. Fahrzeugdach nach Anspruch 1 oder 2,
**dadurch gekennzeichnet,**
**dass** das Sturmgestänge (12) mindestens zwei, vorzugsweise drei gelenkig gekoppelte Sturmstangen (13, 14, 15) umfasst.

4. Fahrzeugdach nach Anspruch 3,
**dadurch gekennzeichnet,**
**dass** die Drehbewegung zwischen zwei Sturmstangen (13, 14, 15) von einem Anschlag begrenzt ist.

5. Fahrzeugdach nach Anspruch 3 oder 4,
**dadurch gekennzeichnet,**
**dass** zwei Sturmstangen (13, 14, 15) durch ein Federelement, insbesondere eine Schenkelfeder, um ihre Drehachse kraftbeaufschlagt sind.

6. Fahrzeugdach nach einem der Ansprüche 1 bis 5,
**dadurch gekennzeichnet,**
**dass** das Sturmgestänge (12) in der Schließposition von einem Verriegelungshebel (17), der an einem Lenker (19) der Viergelenkkinematik (4) angeordnet ist, in eine den Spannbügel (9) sichernde Position beaufschlagt ist.

7. Fahrzeugdach nach Anspruch 6,
**dadurch gekennzeichnet,**
**dass** der Verriegelungshebel (17) gelenkig an dem Lenker (19) der Viergelenkkinematik (4) gelagert ist.

8. Fahrzeugdach nach einem der Ansprüche 1 bis 7,
**dadurch gekennzeichnet,**
**dass** das Sturmgestänge (12) an dem in Fahrtrichtung hinten liegenden Lenker (19) der Viergelenkkinematik (4) bzw. einer Spriegelkinematik abgestützt ist.

9. Fahrzeugdach nach einem der Ansprüche 1 bis 8,
**dadurch gekennzeichnet,**
**dass** der hinten liegende Lenker (19) der Viergelenkkinematik (4) als Hauptlenker (19) ausgeführt ist, an dem ein Aktuator (20) zur Verstellung der Viergelenkkinematik (4) angreift.

10. Fahrzeugdach nach einem der Ansprüche 1 bis 9,
**dadurch gekennzeichnet,**
**dass** die Lenker (18, 19) der Viergelenkkinematik (4) sowie der Spannbügel (9) vorzugsweise über eine Steuerkinematik an einer karosserieseitigen Lagerkonsole (11) gelenkig gelagert sind.

11. Fahrzeugdach nach einem der Ansprüche 1 bis 10,
**dadurch gekennzeichnet,**
**dass** das vordere Dachteil (5) während der Überführungsbewegung zwischen Schließ- und Ablageposition seine Ausrichtung mit der Außenseite nach oben zumindest annähernd beibehält.
